(19) **Europäisches Patentamt**
**European Patent Office**
**Office européen des brevets**

(11) **EP 1 944 618 B1**

(12) **EUROPEAN PATENT SPECIFICATION**

(45) Date of publication and mention
of the grant of the patent:
**16.02.2011 Bulletin 2011/07**

(51) Int Cl.:
*G01S 11/02* (2010.01)    *G01P 3/36* (2006.01)
*H04B 1/707* (2011.01)   *H04B 7/26* (2006.01)

(21) Application number: **06822581.2**

(22) Date of filing: **30.10.2006**

(86) International application number:
**PCT/JP2006/321624**

(87) International publication number:
**WO 2007/052585 (10.05.2007 Gazette 2007/19)**

(54) **MOBILE TERMINAL DEVICE, MOBILE SPEED DETERMINING METHOD AND PROGRAM THEREFOR**

MOBILES ENDGERÄT, MOBILGESCHWINDIGKEITSBESTIMMUNGSVERFAHREN UND PROGRAMM DAFÜR

TERMINAL D'UNITE MOBILE, PROCEDE D'EVALUATION DE VITESSE DE TRANSMISSION UTILISE PAR CELUI-CI, ET PROGRAMME CORRESPONDANT

(84) Designated Contracting States:
**DE FR GB IT**

(30) Priority: **02.11.2005 JP 2005318968**

(43) Date of publication of application:
**16.07.2008 Bulletin 2008/29**

(73) Proprietor: **NEC Corporation**
**Minato-ku**
**Tokyo 108-8001 (JP)**

(72) Inventor: **HIRATA, Masaru**
**Minato-ku, Tokyo, 108-8001 (JP)**

(74) Representative: **Wenzel & Kalkoff**
**Patentanwälte**
**Meiendorfer Strasse 89**
**22145 Hamburg (DE)**

(56) References cited:
**WO-A-01/31824        WO-A2-2004/084022**
**JP-A- 2000 022 665    JP-A- 2000 083 010**
**JP-A- 2002 026 769    JP-A- 2005 252 721**
**US-A- 4 903 212       US-A- 5 012 424**
**US-B2- 6 529 850**

**Description**

TECHNICAL FIELD

The present invention relates to a mobile terminal device, a mobile speed detecting method used in the device, and a program thereof. Particularly, the invention relates to the mobile speed detecting method in the mobile terminal device.

BACKGROUND ART

In a mobile terminal device, it is required to measure a mobile speed of the terminal in order to change a behavior of an application used by a user depending on the mobile speed or to upgrade communication performance by notifying a base station of the mobile speed.

As a method for detecting a speed of a mobile terminal device, a method for measuring a speed using a rake receiver is known. In this case, the mobile speed is generally measured by calculating a frequency of a fading signal from a signal received by the rake receiver (for example, see Patent document 1).

In a technique described in the Patent Document 1, the mobile speed is estimated by the following equation. That is to say, a fading pitch t may be obtained according to the following equation.

$$t = c/(f \times v) \qquad (1)$$

Where the mobile speed is denoted by v, a frequency to be used is denoted by f and a light speed is denoted by c. That is to say, the fading pitch t is inversely proportional to a product of the mobile speed v and the frequency f of a radio wave.

A fading frequency fd may be obtained as follows.

$$fd = 1/t = (f \times v)/c \qquad (2)$$

Where an inverse number of the fading pitch t is the fading frequency fd, the fading frequency fd is proportional to a product of the mobile speed v and the frequency f of a radio wave to be used. Since the frequency f to be used is known, the speed of the mobile terminal device can be estimated based on the fading pitch t (fading frequency fd). In this case, the mobile speed v may be obtained as follows.

$$v = (c \times fd)/f \qquad (3)$$

In the mobile terminal device, an AFC (Auto Frequency Control) for controlling a standard frequency of the mobile terminal device based on a received signal is carried out in order to match a frequency with the standard frequency of a base station. In this case, the AFC is known as a technique to detect a frequency error between a transmitted carrier frequency and a received standard frequency generated due to variations in products and a temperature change in radio communication.

Patent document 1: Japanese Patent Application Laid-Open No. 2000-022665

Moreover US 6,529,850 discloses a method for correcting AGC effets an the signal amplitude level when using the crossing rate of the receive power (fading rate) as an estimator of the receiver's velocity.

DISCLOSURE OF THE INVENTION

Problem to be solved by the invention

However, in the conventional method for detecting a speed of a mobile terminal device, a standard frequency of the mobile terminal device is controlled using a signal including a fading signal by an AFC in the case where the fading signal has a constant frequency, for example, in the case where the mobile terminal device moves toward a base station.

For this reason, the mobile speed of the mobile terminal device cannot be correctly detected, and the resultant speed is low.

Here, the following equation is obtained, where a receiving frequency of the mobile terminal device is denoted by f, a transmitted carrier frequency from the base station is denoted by $f_{L0}$, a fading frequency is denoted by fd, and an error of a local frequency of the mobile terminal device is denoted by fa.

$$f = f_{Lo} + fd + fa$$

In the case where the AFC controls the standard frequency of the mobile terminal using a signal including the fading signal, the AFC works to cancel the above fading frequency fd and the local frequency error fa of the mobile terminal device. Thus, the mobile speed of the mobile terminal device cannot be obtained because of canceling of the fading frequency. That is to say, since the mobile speed of the mobile terminal device is detected as 0, the resultant speed becomes low.

Therefore, it is an object of the present invention to solve the above problem and to provide a mobile terminal device capable of suppressing the lowering of a resultant speed when speed data cannot be correctly measured by a rake receiver according to control such as an AFC, a mobile speed detecting method used in the device and a program thereof.

MEANS FOR SOLVING THE PROBLEMS

A mobile terminal device of the present invention is a mobile terminal device according to claim 1.

A mobile speed detecting method of the present invention is a mobile speed detecting method according to claim 5.

A program of a mobile speed detecting method of the present invention is a program according to claim 9.

That is to say, the mobile terminal device of the present invention is capable of accurate speed measurement by changing a filter factor for detecting the mobile speed of the mobile terminal device (the filter factor for averaging the speed data measured by a rake receiver and the resultant mobile speed detected just before the measurement) depending on a speed state measured by the rake receiver based on a fading signal.

For more specific description, in the mobile terminal device of the present invention, the speed data measured by the rake receiver is compared with the current resultant speed detected just before the measurement, so that the comparison result showing whether the speed data is faster or slower than the current resultant speed is obtained. When the comparison result shows that the speed data is faster, the speed data is used as the resultant data, without performing any filtering process at a filter section. And, when the comparison result shows that the speed data is slower, the filter section averages the current resultant speed and the speed data so as to obtain the resultant speed.

As a result, in the mobile terminal device of the present invention, the lowering of the resultant speed can be suppressed even if a fading signal cannot be calculated by control of the AFC (Auto Frequency Control) or the like by averaging the resultant speed.

EFFECTS OF THE INVENTION

The present invention produces an effect such that lowering of the resultant speed can be suppressed when the speed data cannot be correctly measured by a rake receiver due to control of the AFC or the like by having the following configuration and operation.

BEST MODE FOR CARRYING OUT THE INVENTION

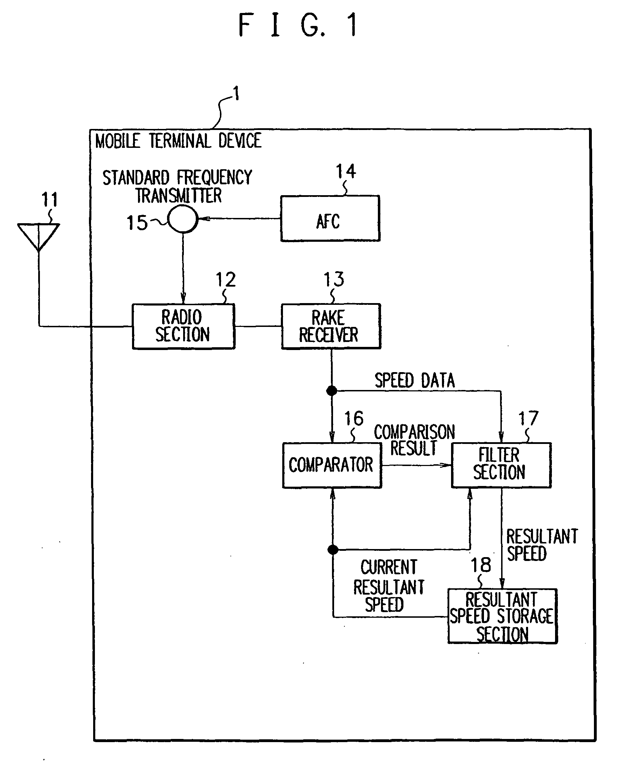

An exemplary embodiment of the present invention is described below with reference to drawings. FIG. 1 is a block diagram illustrating a configuration of a mobile terminal device according to an exemplary embodiment of the present invention. In FIG. 1, the mobile terminal device 1 includes a radio section 12 connected to an antenna 11, a rake receiver 13 which obtains a base band signal from the radio section 12, an AFC (Auto Frequency Control) 14 which measures an error of a standard frequency between a base station (not shown) and the mobile terminal device 1, a standard frequency transmitter 15 in which a frequency is controlled by the AFC 14, a comparator 16 which compares speed data measured by the rake receiver 13 with a current resultant speed detected just before the measurement, a filter section 17 which averages the speed data and the current resultant speed based on the comparison result so as to obtain a resultant speed, and a resultant speed storage section 18 which stores the resultant speed obtained by the filter section 17.

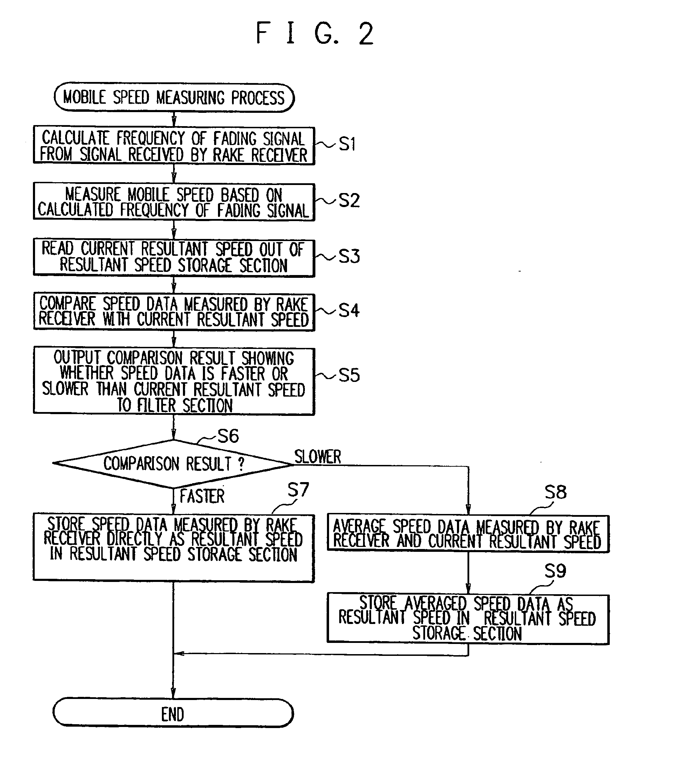

FIG. 2 is a flow chart illustrating a measuring operation for the mobile speed in the mobile terminal device 1 according to the embodiment of the present invention. The measuring operation for the mobile speed in the mobile terminal device 1 is described with reference to FIGS. 1 and 2. Here, the process shown in FIG. 2 may be performed by a CPU (central processing unit) (not shown), which is a component of the mobile terminal device 1, executing a program.

The mobile terminal device 1 calculates a frequency of a fading signal from a signal received by the rake receiver 13 (step S1 in FIG. 2), and measures the mobile speed based on the calculated frequency of the fading signal (step S2 in FIG. 2). This mobile speed may be estimated by the above equation (3), and the estimated value is output as the measured speed data from the rake receiver 13.

The comparing section 16 reads a current resultant speed detected just before the measurement out of the resultant speed storage section 18 (step S3 in FIG. 2), compares the speed data measured by the rake receiver 13 with the current resultant speed (step S4 in FIG. 2), and outputs the comparison result showing whether the speed data is faster or slower than the current resultant speed to the filter section 17 (step S5 in FIG. 2).

When the comparison result by the comparing section 16 shows that the speed data is faster (step S6 in FIG. 2), the filter section 17 stores the speed data as the resultant speed in the resultant speed storage section 18, without performing any filtering process on the speed data measured by the rake receiver 13 (step S7 in FIG. 2).

When the comparison result by the comparing section 16 shows that the speed data is slower (step S6 in FIG. 2), the filter section 17 averages the speed data measured by the rake receiver 13 and the current resultant speed (step S8 in FIG. 2), and stores the averaged speed data as the resultant speed in the resultant speed storage section 18 (step S9 in FIG. 2).

The filtering process by the filter section 17 is generally executed according to the following equation.

$$\text{resultant speed} = \text{speed data} * \lambda + \text{current resultant speed} * (1\text{-}\lambda)(4)$$

Here, $\lambda$ represents a factor of the filter. When the comparison result of the comparing section 16 shows that the speed data is slower, the factor $\lambda$ of the filter may be set to 0.1, for example, so that the speed data and the current resultant speed can be averaged weighing more on the current resultant speed. The factor of the filter can be set arbitrarily depending on the comparison result of the comparing section 16.

As a result, in this embodiment, the lowering of the resultant speed can be suppressed even if the fading signal is canceled by the control of the AFC 14 or the like, and thus the frequency of the fading signal cannot be calculated, by averaging the resultant speed at the filter section 17.

In this embodiment, the lowering of resultant speed can be suppressed even if the speed data in the rake receiver 13 cannot be correctly measured by the control of the AFC 14 or the like in the case where the mobile terminal device 1 moves toward the base station, by averaging the resultant speed at the filter section 17.

In the present invention, in the operation in the filter section 17, when the comparison result is faster, the speed data may be calculated with varied filter coefficient value $\lambda$ rather than using the speed data as it is (for example, $\lambda$ in the equation (4) may be set to "0.9") so that a similar effect can be obtained. The factor $\lambda$ of the filter is generally set satisfying "$\lambda$ in the case of the comparison result being slower < $\lambda$ in the case of the comparison result being fastner".

In the present invention, the resultant speed calculated in the above processing operation can be used for changing the behavior of an application used by a user or for improving the communication performance by notifying the base station of the mobile speed. For example, the present invention can be used for techniques such as to make a searching speed of the base station changeable depending on the resultant speed calculated in the above processing operation.

BRIREF DESCRIPTION OF THE DRAWINGS

[FIG. 1] FIG. 1 is a block diagram illustrating a configuration of a mobile terminal device according to an exemplary embodiment of the present invention; and

[FIG. 2] FIG. 2 is a flow chart illustrating an operation for measuring a mobile speed in the mobile terminal device according to an exemplary embodiment of the present invention.

DESCRIPTION OF REFERENCE NUMERALS

1: mobile terminal device

11: antenna

12: radio section

13: rake receiver

14: AFC

15: standard frequency transmitter

16: comparator

17: filter section

18: resultant speed storage section

**Claims**

1. A mobile terminal device (1) performing a function for measuring a mobile speed, comprising:

   a measuring unit (13) which measures the mobile speed based on a received fading signal;
   a resultant speed calculating unit (17) which performs an arithmetic operation on a measurement result of the measuring unit so as to calculate a resultant speed; and
   a comparing unit (16) which compares the measurement result of the measuring unit (13) with the resultant speed calculated by the resultant speed calculating unit (17) just before the measurement result, **characterized in that**
   the terminal device (1) further comprises a storage unit (18) which stores the resultant speed calculated by the resultant speed calculating unit (17); and
   that the resultant speed calculating unit (17) averages the measurement result of the measuring unit (13) and the resultant speed stored in the storage unit (18) according to the comparison result of the comparing unit (16).

2. The mobile terminal device (1) according to claim 1, wherein the resultant speed calculating unit (17) executes a filtering process on the measurement result of the measuring unit (13) and the resultant speed stored in the storage unit (18) using a filter factor depending on the comparison result of the comparing unit (16) so as to average the measurement result of the measuring unit (13) and the resultant speed stored in the storage unit (18).

3. The mobile terminal device (1) according to claim 2, wherein the resultant speed calculating unit (17) uses the measurement result as the resultant speed, without performing any filtering process when the comparing unit detects that the measurement result is faster than the resultant speed stored in the storage unit (18).

4. The mobile terminal (1) device according to claim 2 or 3, wherein the resultant speed calculating unit (17) uses the average value of the measurement result of the measuring unit (13) and the resultant speed stored in the storage unit (18), which are obtained by the filtering process, as the resultant speed when the comparing unit (16) detects that the measurement result is slower than the resultant speed stored in the storage unit (18).

5. A mobile speed detecting method used in a mobile terminal device (1) including a measuring unit (13) for measuring a mobile speed, wherein
   the measuring unit (13) measures the mobile speed based on a received fading signal,
   the mobile terminal device (1) executes a resultant speed calculating process for performing an arithmetic operation on a measurement result of the measuring unit (13) so as to calculate a resultant speed, and a comparing process for comparing the measurement result of the measuring unit (13) with the resultant speed calculated in the resultant speed calculating process just before the measurement result, **characterized in that**
   the mobile terminal device (1) further executes a storing process for storing the resultant speed calculated by the resultant speed calculating unit (17) in a storage unit (18), and that,
   in the resultant speed calculating process, the measurement result of the measuring unit (13) and the resultant speed stored in the storage unit (18) are averaged depending the comparison result of the comparing process.

6. The mobile speed detecting method according to claim 5, wherein in the resultant speed calculating process, a filtering process is executed on the measurement result of the measuring unit (13) and the resultant speed stored in the storage unit (18) using a filter factor depending on the comparison result of the comparing process.

7. The mobile speed detecting method according to claim 6, wherein in the resultant speed calculating process, the measurement result is used as the resultant speed, without performing any filtering process when the detection is made that the measurement result is faster than the resultant speed stored in the storage unit (18) in the comparing process.

8. The mobile speed detecting method according to claim 6 or 7, wherein in the resultant speed calculating process, the average value of the measurement result of the measuring unit (13) and the resultant speed stored in the storage unit (18), which are obtained by the filtering process, is used as the resultant speed when the detection is made that the measurement result is slower than the resultant speed stored in the storage unit (18) in the comparing process.

9. A computer-readable medium storing a program of a mobile speed detecting method used in a mobile terminal device (1) including a measuring unit (13) for measuring a mobile speed based on a received fading signal, which allows a computer of the mobile terminal device (1) to execute: a resultant speed calculating process for performing an arithmetic operation on a measurement result of the measuring unit (13) so as to calculate a resultant speed; and a comparing process for comparing the measurement result of the measuring unit (13) with the resultant speed calculated in the resultant speed calculating process just before the measurement result,
**characterized in that**
it further allows a computer of the mobile terminal device (1) to execute a storing process for storing the resultant speed calculated by the resultant speed calculating unit (17) in a storage unit (18), and that
in the resultant speed calculating process, the measurement result of the measuring unit (13) and the resultant speed stored in the storage unit (18) are averaged depending on the comparison result of the comparing process.

**Patentansprüche**

1. Mobiles Endgerät (1), das eine Funktion zum Messen einer Mobilgeschwindigkeit ausführt, umfassend:

eine Messeinheit (13), die die Mobilgeschwindigkeit auf Basis eines empfangenen Schwundsignals misst;
eine Einheit (17) zur Berechnung einer sich ergebenden Geschwindigkeit, die eine arithmetische Operation an einem Messergebnis der Messeinheit ausführt, um eine sich ergebende Geschwindigkeit zu berechnen; und
eine Vergleichseinheit (16), die das Messergebnis der Messeinheit (13) mit der sich ergebenden Geschwindigkeit vergleicht, die von der Einheit (17) zur Berechnung einer sich ergebenden Geschwindigkeit direkt vor dem Messergebnis berechnet wird,
**dadurch gekennzeichnet, dass**
das Endgerät (1) weiterhin eine Speichereinheit (18) umfasst, die die von der Einheit (17) zur Berechnung der sich ergebenden Geschwindigkeit berechnete sich ergebende Geschwindigkeit speichert; und
dass die Einheit (17) zur Berechnung der sich ergebenden Geschwindigkeit das Messergebnis der Messeinheit (13) und die in der Speichereinheit (18) gespeicherte sich ergebende Geschwindigkeit gemäß dem Vergleichsergebnis der Vergleichseinheit (16) mittelt.

2. Mobiles Endgerät (1) nach Anspruch 1, wobei die Einheit (17) zur Berechnung der sich ergebenden Geschwindigkeit unter Verwendung eines Filterfaktors, der von dem Vergleichsergebnis der Vergleichseinheit (16) abhängt, einen Filterprozess an dem Messergebnis der Messeinheit (13) und der in der Speichereinheit (18) gespeicherten sich ergebenden Geschwindigkeit ausführt, um das Messergebnis der Messeinheit (13) und die in der Speichereinheit (18) gespeicherten sich ergebenden Geschwindigkeit zu mitteln.

3. Mobiles Endgerät (1) nach Anspruch 2, wobei die Einheit (17) zur Berechnung der sich ergebenden Geschwindigkeit das Messergebnis als die sich ergebende Geschwindigkeit verwendet, ohne einen Filterprozess durchzuführen, wenn die Vergleichseinheit erkennt, dass das Messergebnis schneller ist als die in der Speichereinheit (18) gespeicherte sich ergebende Geschwindigkeit.

4. Mobiles Endgerät (1) nach Anspruch 2 oder 3, wobei die Einheit (17) zur Berechnung der sich ergebenden Geschwindigkeit den Mittelwert des Messergebnisses der Messeinheit (13) und die in der Speichereinheit (18) gespeicherte sich ergebende Geschwindigkeit, die durch den Filterprozess erhalten werden, als die sich ergebende Geschwindigkeit verwendet, wenn die Vergleichseinheit (16) erkennt, dass das Messergebnis langsamer als die in der Speichereinheit (18) gespeicherte sich ergebende Geschwindigkeit ist.

5. Mobilgeschwindigkeitserfassungsverfahren, das in einem mobilen Endgerät (1) umfassend eine Messeinheit (13) zum Messen einer Mobilgeschwindigkeit verwendet wird, wobei
die Messeinheit (13) die Mobilgeschwindigkeit auf Basis eines empfangenen Schwundsignals misst,
das mobile Endgerät (1) einen Prozess zur Berechnung einer sich ergebenden Geschwindigkeit zum Ausführen einer arithmetischen Operation an einem Messergebnis der Messeinheit (13), um eine sich ergebende Geschwindigkeit zu berechnen, und einen Vergleichsprozess zum Vergleichen des Messergebnisses der Messeinheit (13) mit der sich ergebenden Geschwindigkeit, die in dem Prozess zur Berechnung der sich ergebenden Geschwindigkeit direkt vor dem Messergebnis berechnet wird, ausführt,
**dadurch gekennzeichnet, dass**
das mobile Endgerät (1) weiterhin einen Speicherprozess zum Speichern der von der Einheit (17) zur Berechnung der sich ergebenden Geschwindigkeit berechneten sich ergebenden Geschwindigkeit in einer Speichereinheit (18) durchführt, und dass in dem Prozess zur Berechnung der sich ergebenden Geschwindigkeit das Messergebnis der Messeinheit (13) und die in der Speichereinheit (18) gespeicherte sich ergebende Geschwindigkeit abhängig von dem Vergleichsergebnis des Vergleichsprozesses gemittelt werden.

6. Mobilgeschwindigkeitserfassungsverfahren nach Anspruch 5, wobei in dem Prozess zur Berechnung der sich ergebenden Geschwindigkeit unter Verwendung eines Filterfaktors, der von dem Vergleichsergebnis des Vergleichsprozesses abhängt, ein Filterprozess an dem Messergebnis der Messeinheit (13) und der in der Speichereinheit (18) gespeicherten sich ergebenden Geschwindigkeit durchgeführt wird.

7. Mobilgeschwindigkeitserfassungsverfahren nach Anspruch 6, wobei in dem Prozess zur Berechnung der sich ergebenden Geschwindigkeit das Messergebnis als die sich ergebende Geschwindigkeit verwendet wird, ohne dass ein Filterprozess durchgeführt wird, wenn in dem Vergleichsprozess erkannt wird, dass das Messergebnis schneller ist als die in der Speichereinheit (18) gespeicherte sich ergebende Geschwindigkeit.

8. Mobilgeschwindigkeitserfassungsverfahren nach Anspruch 6 oder 7, wobei in dem Prozess zur Berechnung der sich ergebenden Geschwindigkeit der Mittelwert des Messergebnisses der Messeinheit (13) und der in der Speichereinheit (18) gespeicherten sich ergebenden Geschwindigkeit, die durch den Filterprozess erhalten werden, als die sich ergebende Geschwindigkeit verwendet wird, wenn in dem Vergleichsprozess erkannt wird, dass das Messergebnis langsamer ist als die in der Speichereinheit (18) gespeicherte sich ergebende Geschwindigkeit.

9. Computerlesbares Medium, das ein Programm eines Mobilgeschwindigkeitserfassungsverfahrens speichert, das in einem mobilen Endgerät (1) umfassend eine Messeinheit (13) zum Messen einer Mobilgeschwindigkeit auf Basis eines empfangenen Schwundsignals verwendet wird, das es einem Computer des mobilen Endgeräts (1) ermöglicht, Folgendes auszuführen: einen Prozess zur Berechnung einer sich ergebenden Geschwindigkeit zum Ausführen einer arithmetischen Operation an einem Messergebnis der Messeinheit (13), um eine sich ergebende Geschwindigkeit zu berechnen; und einen Vergleichsprozess zum Vergleichen des Messergebnisses der Messeinheit (13) mit der sich ergebenden Geschwindigkeit, die in dem Prozess zur Berechnung der sich ergebenden Geschwindigkeit direkt vor dem Messergebnis berechnet wird,
**dadurch gekennzeichnet, dass**
es einem Computer des mobilen Endgeräts (1) weiterhin ermöglicht, einen Speicherprozess zum Speichern der von der Einheit (17) zur Berechnung der sich ergebenden Geschwindigkeit berechneten sich ergebenden Geschwindigkeit in einer Speichereinheit (18) durchzuführen, und dass
in dem Prozess zur Berechnung der sich ergebenden Geschwindigkeit das Messergebnis der Messeinheit (13) und die in der Speichereinheit (18) gespeicherte sich ergebende Geschwindigkeit abhängig von dem Vergleichsergebnis des Vergleichsprozesses gemittelt werden.

**Revendications**

1. Dispositif terminal de mobile (1) effectuant une fonction pour mesurer une vitesse de mobile, comprenant :

une unité de mesure (13) qui mesure la vitesse de mobile sur la base d'un signal d'évanouissement reçu ;
une unité de calcul de vitesse résultante (17) qui effectue une opération arithmétique sur un résultat de mesure de l'unité de mesure afin de calculer une vitesse résultante ; et

une unité de comparaison (16) qui compare le résultat de mesure de l'unité de mesure (13) avec la vitesse résultante calculée par l'unité de calcul de vitesse résultante (17) juste avant le résultat de mesure,

**caractérisé en ce que**

le dispositif terminal (1) comprend en outre une unité de stockage (18) qui stocke la vitesse résultante calculée par l'unité de calcul de vitesse résultante (17) ; et

**en ce que** l'unité de calcul de vitesse résultante (17) établit la moyenne du résultat de mesure de l'unité de mesure (13) et de la vitesse résultante stockée dans l'unité de stockage (18) selon le résultat de comparaison de l'unité de comparaison (16).

2. Dispositif terminal de mobile (1) selon la revendication 1, dans lequel l'unité de calcul de vitesse résultante (17) exécute un processus de filtrage sur le résultat de mesure de l'unité de mesure (13) et la vitesse résultante stockée dans l'unité de stockage (18) en utilisant un facteur de filtre en fonction du résultat de comparaison de l'unité de comparaison (16) afin d'établir la moyenne du résultat de mesure de l'unité de mesure (13) et de la vitesse résultante stockée dans l'unité de stockage (18).

3. Dispositif terminal de mobile (1) selon la revendication 2, dans lequel l'unité de calcul de vitesse résultante (17) utilise le résultat de mesure comme la vitesse résultante, sans effectuer aucun processus de filtrage lorsque l'unité de comparaison détecte que le résultat de mesure est plus rapide que la vitesse résultante stockée dans l'unité de stockage (18).

4. Dispositif terminal de mobile (1) selon la revendication 2 ou 3, dans lequel l'unité de calcul de vitesse résultante (17) utilise la valeur moyenne du résultat de mesure de l'unité de mesure (13) et de la vitesse résultante stockée dans l'unité de stockage (18), qui sont obtenus par le processus de filtrage, comme la vitesse résultante lorsque l'unité de comparaison (16) détecte que le résultat de mesure est plus lent que la vitesse résultante stockée dans l'unité de stockage (18).

5. Procédé de détection de vitesse de mobile utilisé dans un dispositif terminal de mobile (1) incluant une unité de mesure (13) pour mesurer une vitesse de mobile, où

l'unité de mesure (13) mesure la vitesse de mobile sur la base d'un signal d'évanouissement reçu,

le dispositif terminal de mobile (1) exécute un processus de calcul de vitesse résultante pour effectuer une opération arithmétique sur un résultat de mesure de l'unité de mesure (13) afin de calculer une vitesse résultante, et un processus de comparaison pour comparer le résultat de mesure de l'unité de mesure (13) avec la vitesse résultante calculée lors du processus de calcul de vitesse résultante juste avant le résultat de mesure,

**caractérisé en ce que**

le dispositif terminal de mobile (1) exécute en outre un processus de stockage pour stocker la vitesse résultante calculée par l'unité de calcul de vitesse résultante (17) dans une unité de stockage (18), et **en ce que**,

lors du processus de calcul de vitesse résultante, le résultat de mesure de l'unité de mesure (13) et la vitesse résultante stockée dans l'unité de stockage (18) font l'objet d'un établissement de moyenne en fonction du résultat de comparaison du processus de comparaison.

6. Procédé de détection de vitesse de mobile selon la revendication 5, dans lequel lors du processus de calcul de vitesse résultante, un processus de filtrage est exécuté sur le résultat de mesure de l'unité de mesure (13) et la vitesse résultante stockée dans l'unité de stockage (18) en utilisant un facteur de filtre en fonction du résultat de comparaison du processus de comparaison.

7. Procédé de détection de vitesse de mobile selon la revendication 6, dans lequel, lors du processus de calcul de vitesse résultante, le résultat de mesure est utilisé comme la vitesse résultante, sans effectuer aucun processus de filtrage lorsque la détection est effectuée selon laquelle le résultat de mesure est plus rapide que la vitesse résultante stockée dans l'unité de stockage (18) lors du processus de comparaison.

8. Procédé de détection de vitesse de mobile selon la revendication 6 ou 7, dans lequel lors du processus de calcul de vitesse résultante, la valeur moyenne du résultat de mesure de l'unité de mesure (13) et de la vitesse résultante stockée dans l'unité de stockage (18), qui sont obtenus par le processus de filtrage, est utilisée comme la vitesse résultante lorsque la détection est effectuée selon laquelle le résultat de mesure est plus lent que la vitesse résultante stockée dans l'unité de stockage (18) lors du processus de comparaison.

9. Support lisible par ordinateur stockant un programme d'un procédé de détection de vitesse de mobile utilisé dans un dispositif terminal de mobile (1) incluant une unité de mesure (13) pour mesurer une vitesse de mobile sur la base d'un signal d'évanouissement reçu, qui permet à un ordinateur du dispositif terminal de mobile (1) d'exécuter : un processus de calcul de vitesse résultante pour effectuer une opération arithmétique sur un résultat de mesure de l'unité de mesure (13) afin de calculer une vitesse résultante ; et un processus de comparaison pour comparer le résultat de mesure de l'unité de mesure (13) avec la vitesse résultante calculée lors du processus de calcul de vitesse résultante juste avant le résultat de mesure,

**caractérisé en ce que**

il permet en outre à un ordinateur du dispositif terminal de mobile (1) d'exécuter un processus de stockage pour stocker la vitesse résultante calculée par l'unité de calcul de vitesse résultante (17) dans une unité de stockage (18), et **en ce que**,

lors du processus de calcul de vitesse résultante, le résultat de mesure de l'unité de mesure (13) et la vitesse résultante stockée dans l'unité de stockage (18) font l'objet d'un établissement de moyenne en fonction du résultat de comparaison du processus de comparaison.

# F I G. 1

# F I G. 2

MOBILE SPEED MEASURING PROCESS

CALCULATE FREQUENCY OF FADING SIGNAL FROM SIGNAL RECEIVED BY RAKE RECEIVER — S1

MEASURE MOBILE SPEED BASED ON CALCULATED FREQUENCY OF FADING SIGNAL — S2

READ CURRENT RESULTANT SPEED OUT OF RESULTANT SPEED STORAGE SECTION — S3

COMPARE SPEED DATA MEASURED BY RAKE RECEIVER WITH CURRENT RESULTANT SPEED — S4

OUTPUT COMPARISON RESULT SHOWING WHETHER SPEED DATA IS FASTER OR SLOWER THAN CURRENT RESULTANT SPEED TO FILTER SECTION — S5

S6

COMPARISON RESULT ?  SLOWER

FASTER  S7

S8

STORE SPEED DATA MEASURED BY RAKE RECEIVER DIRECTLY AS RESULTANT SPEED IN RESULTANT SPEED STORAGE SECTION

AVERAGE SPEED DATA MEASURED BY RAKE RECEIVER AND CURRENT RESULTANT SPEED

S9

STORE AVERAGED SPEED DATA AS RESULTANT SPEED IN RESULTANT SPEED STORAGE SECTION

END

EP 1 944 618 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000022665 A
- US 6529850 B